# FASCICULE DE BREVET EUROPEEN

(11) **EP 4 512 531 B1**
(45) Date de publication et mention de la délivrance du brevet: **22.07.2026**
(21) Numéro de dépôt: 24194230.9
(22) Date de dépôt: 13.08.2024
(51) Int. Cl.: B05B 3/10

(54) **PULVÉRISATEUR COMPRENANT UNE JUPE D'AMENÉE D'AIR ET PROCÉDÉ DE MONTAGE D'UNE TELLE JUPE SUR UN CORPS PRINCIPAL D'UN TEL PULVÉRISATEUR**
ZERSTÄUBER MIT EINER LUFTZUFUHRSCHÜRZE UND VERFAHREN ZUR MONTAGE SOLCH EINER SCHÜRZE AN EINEM HAUPTKÖRPER SOLCH EINES ZERSTÄUBERS
SPRAYER COMPRISING AN AIR SUPPLY SKIRT AND METHOD FOR MOUNTING SUCH A SKIRT ON A MAIN BODY OF SUCH A SPRAYER

(30) Priorité: 14.08.2023 FR 2308700
(43) Date de publication de la demande: 26.02.2025
(73) Titulaire: Exel Industries, 51200 Epernay (FR)
(72) Inventeur: VANZETTO, Denis, 51200 Epernay (FR)
(74) Mandataire: Lavoix

(56) Documents cités:
- CN-C- 100 430 149
- DE-A1- 102004 032 045
- FR-B1- 2 852 868
- US-A1- 2017 266 672
- US-B2- 7 452 421

## Description

La présente invention concerne un pulvérisateur de produit de revêtement équipé d'une jupe d'amenée d'air qui permet de distribuer, à proximité d'un organe de pulvérisation du pulvérisateur, un flux d'air de guidage ou de conformation d'un nuage de gouttelettes de produit de revêtement quittant l'organe de pulvérisation. Cet organe de pulvérisation peut être un bol rotatif ou une tête de pulvérisation magnétique.

Il est connu de monter une jupe d'amenée d'air sur le corps principal d'un pulvérisateur par vissage. Cette technique impose de ménager, sur l'extérieur de la jupe d'amenée d'air, des encoches de vissage pour qu'un outil puisse exercer un couple de vissage ou de dévissage. Ces encoches sont des volumes d'accumulation potentielle de produit de revêtement, ce qui induit des risques de salissure du pulvérisateur ou des surfaces revêtues. En outre, le serrage de la jupe sur le corps du pulvérisateur est relativement lent et nécessite un outil, tel qu'un dynamomètre, pour vérifier que le couple de serrage exercé est suffisant pour assurer une étanchéité à l'air entre la jupe d'amenée d'air et le reste du pulvérisateur. Enfin, le vissage doit le plus souvent être effectué de façon manuelle, au point qu'une automatisation d'un procédé de changement de jupe d'amenée d'air s'avère, en pratique, très complexe.

Une partie de ces problèmes est résolue par les pulvérisateurs décrit dans EP3222360A1 et US2017/266672A1 qui divulguent chacun un pulvérisateur de produit de revêtement équipé d'un moyen d'attraction magnétique entre une jupe d'amenée d'air et un organe fixe. Cette solution donne globalement satisfaction. Toutefois, les efforts nécessaires à l'étanchéité du montage de la jupe d'amenée d'air sur un corps d'un pulvérisateur sont importants, notamment pour comprimer des joints disposés à l'interface entre la jupe d'amenée d'air et le corps principal du pulvérisateur. Il en résulte, que des aimants de taille importante doivent être utilisés et que les efforts exercés sont intenses, donc potentiellement dangereux, notamment en cas de coincement d'un doigt d'un utilisateur ou d'un outil porté par l'utilisateur. En outre, l'intensité des efforts magnétiques est telle que, en pratique, des outils spécifiques doivent être utilisés pour démonter la jupe d'amenée d'air lors d'une opération de maintenance.

Les documents FR2852868B1, CN100430149C, DE102004032045A1 et US7452421B2 décrivent également des pulvérisateurs de produit de revêtement.

C'est à ces inconvénients qu'entend plus particulièrement remédier l'invention en proposant un nouveau pulvérisateur de produit de revêtement dans lequel le montage d'une jupe d'amenée d'air sur un corps principal est facilité et rendu sans danger pour l'opérateur, ce montage pouvant, dans une large mesure, être automatisé.

À cet effet, l'invention a pour objet un pulvérisateur de produit de revêtement comprenant un corps principal, une jupe d'amenée d'air rapportée sur le corps principal et un moyen d'attraction magnétique entre le corps magnétique et la jupe d'amenée d'air, caractérisé en ce que le pulvérisateur comprend un système magnéto-pneumatique ou magnéto-hydraulique qui inclut
- un dispositif magnétique d'accrochage de la jupe d'amenée d'air sur le corps principal ; et
- un mécanisme pneumatique ou hydraulique de verrouillage et de serrage de la jupe d'amenée d'air sur le corps principal.

Grâce à l'invention, le système magnéto-pneumatique ou magnéto-hydraulique du pulvérisateur permet d'exercer, dans un premier temps, un effort magnétique d'accrochage de la jupe d'amenée d'air sur le corps principal puis, dans un deuxième temps, un effort mécanique de serrage de la jupe d'amenée d'air sur le corps principal, ce qui permet notamment de comprimer des joints d'étanchéité disposés entre la jupe et le corps principal. Ce fonctionnement en deux temps autorise que l'effort magnétique exercé par le dispositif magnétique soit relativement peu intense, ce qui le rend moins dangereux pour un utilisateur qui manipule la jupe d'amenée d'air lors de son montage sur le corps principal. Le fait que cet effort magnétique soit relativement peu intense facilite le démontage de la jupe d'amenée d'air par rapport au corps principal. En outre, cet effort magnétique relativement peu intense et le caractère automatisable du système magnéto-pneumatique ou magnéto-hydraulique rend le pulvérisateur compatible avec un procédé de montage ou de démontage de la jupe d'amenée d'air sur le corps principal du pulvérisateur au moyen d'un robot.

Selon des aspects avantageux mais non obligatoires de l'invention, un tel pulvérisateur peut incorporer une ou plusieurs des caractéristiques suivantes prise(s) selon toute combinaison techniquement admissible :
- Le dispositif magnétique d'accrochage est configuré pour exercer, entre la jupe d'amenée d'air et le corps principal, un effort magnétique axial, parallèle à un axe longitudinal du pulvérisateur, avec une première intensité, le mécanisme pneumatique ou hydraulique de serrage est configuré pour exercer entre la jupe d'amenée d'air et le corps principal un effort mécanique axial, parallèle à l'axe longitudinal du pulvérisateur, avec une deuxième intensité et la deuxième intensité est strictement supérieure à la première intensité.
- Le pulvérisateur comprend des joints d'étanchéité disposés entre la jupe d'amenée d'air et le corps principal et les joints d'étanchéité comprimés par l'effort mécanique exercé par le mécanisme pneumatique ou hydraulique de serrage isolent des conduits de circulation d'air de conformation ménagés dans le corps principal et dans un corps de la jupe d'amenée d'air, vis-à-vis de l'extérieur du pulvérisateur.
- La jupe d'amenée d'air comprend un manchon réalisé dans un matériau ferromagnétique, centré sur un axe longitudinal du pulvérisateur en configuration montée de la jupe d'amenée d'air sur le corps principal et pourvu d'au moins un relief externe de coopération avec le mécanisme pneumatique ou hydraulique de serrage.
- Le dispositif magnétique d'accrochage comprend un aimant permanent monté sur un support, mobile parallèlement à l'axe longitudinal du pulvérisateur et l'aimant permanent ou le support est configuré pour recevoir en appui une extrémité du manchon opposé à un corps de jupe.
- Le mécanisme pneumatique ou hydraulique de serrage comprend un piston, mobile parallèlement à l'axe longitudinal du pulvérisateur, à l'intérieur d'une chambre sélectivement alimentée en fluide sous pression, et le piston est équipé d'organes de mise en prise avec le relief externe du manchon.
- Les organes de mise en prise sont des billes, le piston comprend des surfaces de came inclinées par rapport à l'axe longitudinal du pulvérisateur et, lorsque la jupe d'amenée d'air est accrochée sur le corps principal par le dispositif magnétique d'accrochage et lorsque le piston est déplacé en direction d'une extrémité du manchon opposée à un corps de la jupe d'amenée d'air, les surfaces de came exercent sur les billes un effort d'engagement dans le relief externe du manchon, cet effort étant centripète par rapport à l'axe longitudinal.
- Le pulvérisateur comprend au moins un organe élastique de renvoi du piston vers une position dans laquelle les organes de mise en prise sont dégagés du relief externe du manchon.
- Le pulvérisateur comprend un outil de démontage de la jupe d'amenée d'air, cet outil de démontage comprenant des reliefs d'accrochage sur la jupe d'amenée d'air et étant configuré pour exercer sur la jupe d'amenée d'air un effort parallèle à un axe longitudinal du pulvérisateur et opposé à un effort magnétique exercé sur la jupe d'amenée d'air par le dispositif magnétique d'accrochage.

Selon un deuxième aspect, l'invention a pour objet un procédé de montage d'une jupe d'amenée d'air sur un corps principal d'un pulvérisateur de produit de revêtement tel que mentionné ci-dessus, caractérisé en ce qu'il comprend au moins des étapes successives consistant à :
a) introduire un manchon de la jupe d'amenée d'air dans un logement central du corps principal jusqu'à ce que le dispositif magnétique d'accrochage exerce un effort magnétique d'accrochage de la jupe d'amenée d'air sur le corps principal ; et
b) alimenter le mécanisme pneumatique ou hydraulique de serrage en fluide sous pression jusqu'à ce que le mécanisme pneumatique ou hydraulique de serrage exerce un effort mécanique de serrage de la jupe d'amenée d'air sur le corps principal.

Avantageusement, le pulvérisateur lors de l'étape b), le piston déplace les billes en direction d'un fond du logement central, en entraînant le manchon avec les billes engagées dans le relief externe.

L'invention apparaitra plus clairement à la lecture de la description qui va suivre, donnée uniquement à titre d'exemple non limitatif et faite en référence aux dessins annexés dans lesquels :
- [Fig.1] La figure 1 est une coupe longitudinale partiellement éclatée d'un pulvérisateur conforme à un premier mode de réalisation de l'invention ;
- [Fig.2] La figure 2 est une coupe longitudinale en perspective éclatée d'un système magnéto-pneumatique appartenant au pulvérisateur de la figure 1 ;
- [Fig.3] La figure 3 représente, sur deux inserts A) et B), le pulvérisateur de la figure 1 lors d'une première étape de montage d'une jupe d'amenée d'air sur un corps principal, l'insert B) étant une vue à plus grande échelle du détail B sur l'insert A) ;
- [Fig.4] La figure 4 est une vue analogue à la figure 3, lors d'une deuxième étape du procédé de montage ;
- [Fig.5] La figure 5 est une vue analogue à la figure 3, lors d'une troisième étape du procédé de montage ;
- [Fig.6] La figure 6 est une vue analogue à la figure 3, lors d'une quatrième étape du procédé de montage ;
- [Fig.7] La figure 7 est une vue en perspective du pulvérisateur à l'état monté de la jupe sur le corps principal, ainsi que d'un outil de démontage de la jupe ;
- [Fig.8] La figure 8 est une coupe axiale en perspective du pulvérisateur des figures précédentes, en cours de démontage de la jupe ;
- [Fig.9] La figure 9 est une coupe analogue à la figure 1, pour un pulvérisateur conforme à un deuxième mode de réalisation de l'invention ; et
- [Fig.10] La figure 10 est une vue analogue à la figure 1, pour un pulvérisateur conforme à un troisième mode de réalisation de l'invention.

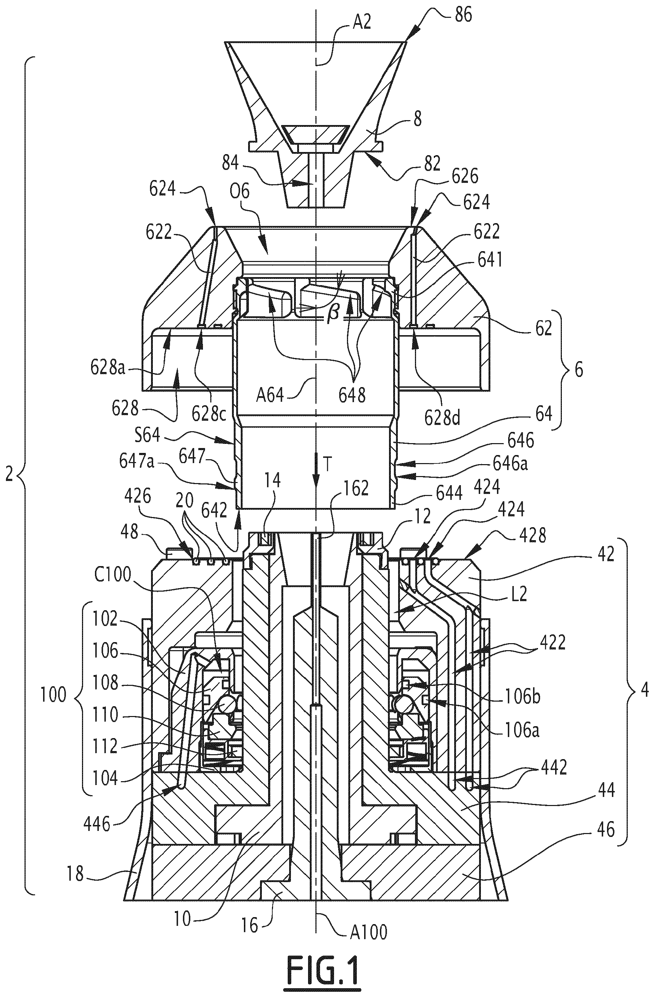

Le pulvérisateur de produit de revêtement 2 représenté sur les figures 1 à 8 comprend un corps principal 4 formé par l'assemblage d'une partie externe 42, d'une partie interne 44 et d'une embase 46.

Par exemple, le produit de revêtement est une peinture liquide, un apprêt ou un vernis destiné à être appliqué sur une carrosserie ou un composant de véhicule automobile.

Des vis 48 solidarisent les parties 42, 44 et 46 du corps principal. Ces vis 48 dépassent par rapport à une face avant 428 de la partie externe 42.

Le pulvérisateur 2 est de type électrostatique à charge interne et comprend une unité haute-tension non-représentée, configurée pour porter à un potentiel électrique donné le produit de revêtement pulvérisé par le pulvérisateur 2.

On note A2 un axe longitudinal du pulvérisateur 2.

On définit un côté avant du pulvérisateur 2 ou d'un composant de ce pulvérisateur comme un côté tourné vers une pièce à revêtir, en cours d'utilisation du pulvérisateur 2, et un côté arrière comme un côté tourné à l'opposé du côté avant. Sur les figures, l'avant du pulvérisateur 2 est tourné vers le haut et l'arrière est tourné vers le bas.

Une jupe d'amenée d'air 6 est montée sur le corps principal 4 en configuration assemblée du pulvérisateur 2. Cette jupe d'amenée d'air 6 comprend un corps de jupe 62 et un manchon 64 vissé sur le corps de jupe 62.

En variante, le corps de jupe 62 et le manchon sont solidarisé par sertissage, soudage et/ou collage.

La solidarisation entre le corps de jupe 62 et le manchon 64 a lieu au niveau d'une extrémité avant 641 du manchon.

Le manchon 64 est réalisé dans un matériau ferromagnétique, par exemple en acier.

Un bol de pulvérisation 8 appartient également au pulvérisateur 2 et est destiné à être entrainé en rotation, autour de l'axe longitudinal A2, par une turbine dont on note 10 le rotor 10. Le stator de la turbine est constitué par la partie interne 44 du corps principal 4 et porte un embout 12 équipé d'un aimant permanent 14, de forme annulaire.

En configuration montée du bol 8 sur le rotor de turbine 10, une surface annulaire 82 du bol 8, qui est réalisé dans un matériau ferromagnétique, vient en regard de l'aimant permanent 14, ce qui a pour effet de créer un palier magnétique entre le bol 8 et l'aimant 14, lorsqu'un écoulement d'air est dirigé entre l'aimant 22 et la surface annulaire 82.

En variante, seule une partie du bol 8 qui définit la surface annulaire 82 est réalisée en matériau ferromagnétique.

Le pulvérisateur 2 comprend également un injecteur 16 de produit de revêtement dont l'extrémité aval 162 pénètre dans un alésage central 84 du bol 8, en configuration montée de ce bol sur le rotor de turbine 10.

Un capot 18 est monté autour du corps principal 4 et protège celui-ci contre les projections de produit de revêtement.

Le corps de jupe 62 est équipé de plusieurs canaux 622 qui le traversent de part en part, selon une direction parallèle à l'axe longitudinal A2 en configuration montée de la jupe d'amenée d'air 6 sur le corps principal 4, et qui alimentent chacun un orifice de sortie 624 par lequel des jets d'air peuvent être dirigés vers un nuage de produit de revêtement quittant une arête 86 du bol 8, afin de conformer ce jet de produit de revêtement et/ou de le diriger vers un objet à revêtir. Les orifices 624 sont ménagés sur une face avant circulaire 626 du corps de jupe 62.

Le corps de jupe 62 définit un logement en creux 628 dans lequel est reçue une portion avant de la partie externe 42 du corps principal 4 en configuration montée de la jupe d'amenée d'air 6 sur le corps principal 4. Le logement en creux 628 est ménagé sur l'arrière du corps de jupe 62.

La partie externe 42 du corps principal 40 comprend des conduits 422 d'acheminement d'air vers la jupe d'amenée d'air 6. Ces canaux 422 sont alimentés en air par des canaux 442 qui s'étendent pour l'essentiel dans un plan différent de celui des figures 1 et 3 à 6 et dont seules les extrémités aval sont visibles sur ces figures.

Le fond 628a du logement en creux 628 est équipé de deux gorges annulaires 628c et 628d qui servent de distributeurs pour alimenter deux groupes de conduits 622 à partir des débouchés 424 des conduits 422. Pour assurer l'étanchéité au passage de l'air entre les conduits 422 et les gorges 628c et 628d, des joints toriques 20 sont disposés dans des gorges annulaires 426 ménagées sur la face avant 428 de la partie externe 42 du corps principal 4, c'est-à-dire dans une zone d'interface entre le corps principal 4 et la jupe 6. Ces joints toriques 20 sont destinés à venir en appui contre le fond 628a du logement en creux 628 et à être comprimés.

Dans l'exemple des figures, les joints toriques 20 et les gorges annulaires 426 sont concentriques et au nombre de trois. En variante non-représentée, le nombre et/ou la forme des joints toriques 20 et des gorges annulaires 426 sont différents.

Le manchon 64 est prévu pour être engagé dans un logement central L2 du pulvérisateur 2 qui est défini, radialement à l'axe longitudinal A2, entre la partie externe 42 et la partie interne 44 du corps principal 4.

On note 642 le bord arrière du manchon 64, c'est-à-dire le bord de ce manchon opposé au corps de jupe 62. On note 644 l'extrémité du manchon 64 qui est la plus proche du bord arrière 642. Le bord arrière 642 délimite l'extrémité arrière 644 à l'opposé du corps de jupe 62. L'extrémité arrière 644 est opposée à l'extrémité avant 641 du manchon 64.

On note S64 la surface radiale externe du manchon 64. Cette surface radiale externe est pourvue d'une gorge périphérique 646 qui forme un logement en creux sur l'extérieur du manchon 64. On note 646a le bord arrière de la gorge périphérique 646, c'est-à-dire le bord de cette gorge le plus proche de l'extrémité 644 du manchon 64.

On note 647 une nervure périphérique externe du manchon 64 qui sépare la gorge périphérique 646 de l'extrémité 644. On note 647a le bord arrière de cette nervure, c'est-à-dire le bord de cette nervure le plus proche de l'extrémité 644 du manchon 64.

Un système magnéto-pneumatique 100 est prévu dans le logement central L2 pour assurer un accrochage de la jupe 6 sur le corps principal 4, ainsi qu'un serrage de cette jupe sur ce corps principal. Le système magnéto-pneumatique 100 comprend un dispositif magnétique d'accrochage 100A et un mécanisme pneumatique de serrage 100B de la jupe d'amenée d'air 6 sur le corps principal 4.

L'accrochage, obtenu grâce au dispositif magnétique d'accrochage 100A, permet d'assurer que la jupe d'amenée d'air 6 reste en position sur le corps principal 4, y compris lorsque celui-ci est déplacé par un robot multiaxe ou un réciprocateur sur lequel est monté le pulvérisateur. Les déplacements du pulvérisateur induisent des accélérations sur la jupe d'amenée d'air 6, qui pourraient avoir pour effet de chasser le manchon 64 hors du logement central L2. L'effort d'accrochage magnétique est dimensionné pour résister à ces accélérations.

L'effort de serrage permet de finaliser le positionnement de la jupe d'amenée d'air 6 sur le corps principal 4 et de comprimer les joints toriques 20, donc d'assurer l'étanchéité du circuit d'alimentation des orifices de sortie 624 en air de conformation du nuage de produit de revêtement.

Le système magnéto-pneumatique 100 s'étend le long d'un axe longitudinal A100 qui est confondu avec l'axe longitudinal A2 du pulvérisateur 2 en configuration montée du système magnéto-pneumatique 100 dans le pulvérisateur 2.

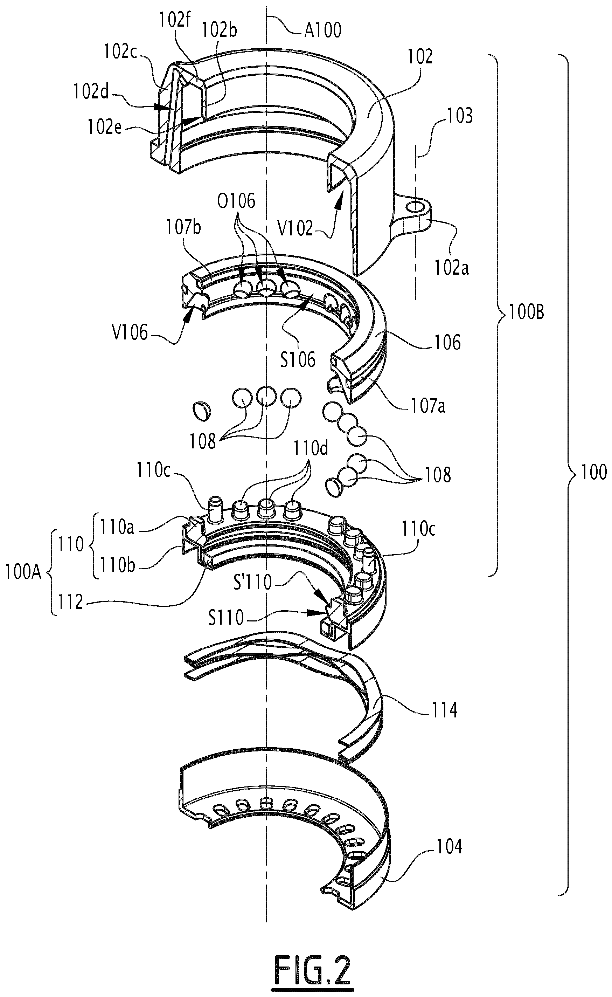

Le système magnéto-pneumatique 100 comprend une coiffe 102 immobilisée sur le corps principal 4 par des vis qui traversent une ou plusieurs pattes 102a prévues sur l'extérieur de la coiffe 102. L'une de ces vis est représentée par son trait d'axe 103 à la figure 2.

La coiffe 102 définit un volume annulaire V102 centré sur l'axe longitudinal A100 et qui est bordé par une paroi radiale interne 102b et une paroi radiale externe 102c.

Un passage 102d est ménagé dans l'épaisseur de la paroi radiale externe 102c et permet de relier fluidiquement un conduit 446 ménagé dans la partie interne 44 du corps principal 4 et le volume V102.

D'autre part, la paroi interne 102b de la coiffe 102 se termine par un bord chanfreiné 102e tourné vers le volume V102 et convergeant vers l'axe longitudinal A100 à l'opposé du fond 102f du volume V102, c'est-à-dire en direction de l'arrière de la coiffe 102.

Le système magnéto-pneumatique 100 comprend également une coupelle 104 posée sur le fond arrière du logement central L2. Dans l'exemple des figures, le fond du logement central L2 est opposé à son embouchure avant et délimité par la partie interne 44.

Le système magnéto-pneumatique 100 comprend également un piston annulaire 106 équipé de deux segments d'étanchéité 107a et 107b. Dans l'exemple, les segments d'étanchéité sont réalisés par deux joints toriques reçus dans deux gorges périphériques 106a et 106b, respectivement externe et interne, ménagées sur le piston 106. Les joints toriques 107a et 107b ne sont pas représentés à la figure 1, ce qui permet de mieux visualiser les gorges 106a et 106b.

En variante, les segments d'étanchéité sont formés par des joints à lèvres. Selon une autre variante, ils sont montés sur les parois de la coiffe 102 en regard du piston 106.

Le piston 106 est mobile, parallèlement aux axes A2 et A100 confondus, en étant partiellement engagé dans le volume V102 de la coiffe 102. Du fait de l'engagement partiel du piston 106 dans le logement V102 et de la portée des segments d'étanchéite107a et 107b contre les parois 102c et 102b, une chambre étanche de volume variable C100 est définie entre les éléments 102 et 106. Cette chambre de volume variable C100 est alimentée en air sous pression provenant du conduit 446 à travers le passage 102d. Des moyens non représentés, tels qu'une source d'air sous pression, une vanne proportionnelle et une vanne de purge permettent d'alimenter la chambre de volume variable C100 en air sous pression ou de la mettre à l'air libre, en fonction d'une séquence de montage ou de démontage de la jupe 6 sur le corps principal 4. La pression de l'air présent dans le conduit 446 est pilotée indépendamment de la pression de l'air d'entrainement du rotor 10 et de la pression de l'air de jupe dans les conduits 442.

En variante, une partie de l'air d'entraînement du rotor 10 peut être déviée vers le conduit 446. Dans ce cas, la chambre de volume variable C100 peut être alimentée en air sous pression dès que la turbine est en fonctionnement. Selon une autre variante, le conduit 446 peut être alimenté en air sous pression à partir d'air utilisé dans le pulvérisateur 2 pour une autre fonction, par exemple à partir de l'air de jupe circulant dans les conduits 442.

Le piston 106 définit également des volumes V106 de réception de billes 108 qui constituent des organes de mise en prise du piston 106 avec la gorge périphérique externe 646 du manchon 64.

Avantageusement, une bille 108 est montée dans chaque volume V106.

Chaque bille 108 est reçue dans un volume V106 dont elle peut dépasser, ou non, à travers une ouverture O106 qui constitue le débouché de chaque volume V106 sur la surface périphérique interne S106 du piston 106.

Chaque volume V106 est défini, sur son côté opposé à son ouverture 0106, par une surface S106 convergente vers l'avant en direction de l'axe longitudinal A100 et inclinée par rapport à cet axe longitudinal d'un angle αnon nul, de préférence compris entre 15° ou 60°, de préférence encore entre 30° et 50°.

Les surfaces S106 des différents volumes V106 constituent des surfaces de came pour le guidage des billes 108.

Le système magnéto-pneumatique 100 comprend également un support 110 qui est également de forme annulaire centrée sur l'axe longitudinal A100 et qui est formé d'un corps massif 110a et d'un profilé 110b, tous deux réalisés dans un matériau ferromagnétique. Les parties 110a et 110b du support 110 sont solidarisées ensemble par tout moyen approprié, notamment par collage, sertissage et/ou soudage.

En variante, le support 110 est monobloc.

Le support 110 est équipé de pions 110c d'indexage en position, autour de l'axe longitudinal A100, vis-à-vis du piston 106.

Le support 100 est également équipé de butées 110d destinées à s'engager dans les volumes V106 par l'arrière du piston 106, pour maintenir les billes 108 en position dans ces volumes.

Le support 100 porte un aimant permanent annulaire 112 qui est disposé sur le côté radial interne du support 100. Dans l'exemple, l'aimant permanent est solidarisé au profilé 110b, par exemple par collage.

D'autre part, le support 100, plus particulièrement son corps 110a définit une première surface interne tronconique S110, centrée sur l'axe longitudinal A100 et convergente en direction du piston 106, et une deuxième surface interne tronconique S'110, centrée sur l'axe longitudinal A100 et divergente en direction du piston 106.

Le système magnéto-pneumatique 100 comprend également un ressort plan 114 qui forme un organe élastique de renvoi du piston 106, et de préférence du support 110, vers l'avant.

Le ressort plan 114 est formé par une lame en acier. L'utilisation d'un ressort plan tel que celui représenté sur les figures présente l'avantage de permettre une course axiale relativement importante du piston 106, alors que l'encombrement axial du ressort 114 est minimal.

En variante, le ressort plan 114 peut être remplacé par un autre organe élastique, notamment un bloc d'élastomère ou un ressort spiral.

On explique maintenant un procédé de montage de la jupe 6 sur le corps principal 4.

Ce montage a lieu par un mouvement de translation axiale de la jupe 62, parallèle à l'axe longitudinal A2. Ce mouvement de translation axiale est représenté par la flèche T aux figures 1 et 3 à 6. Aucun autre mouvement de la jupe d'amenée d'air 6 n'est nécessaire pour la monter sur le corps principal 4.

Ainsi, le montage de la jupe d'amenée d'air 6 sur le corps principal 4 résulte exclusivement d'un mouvement relatif de translation entre ces éléments du pulvérisateur 2.

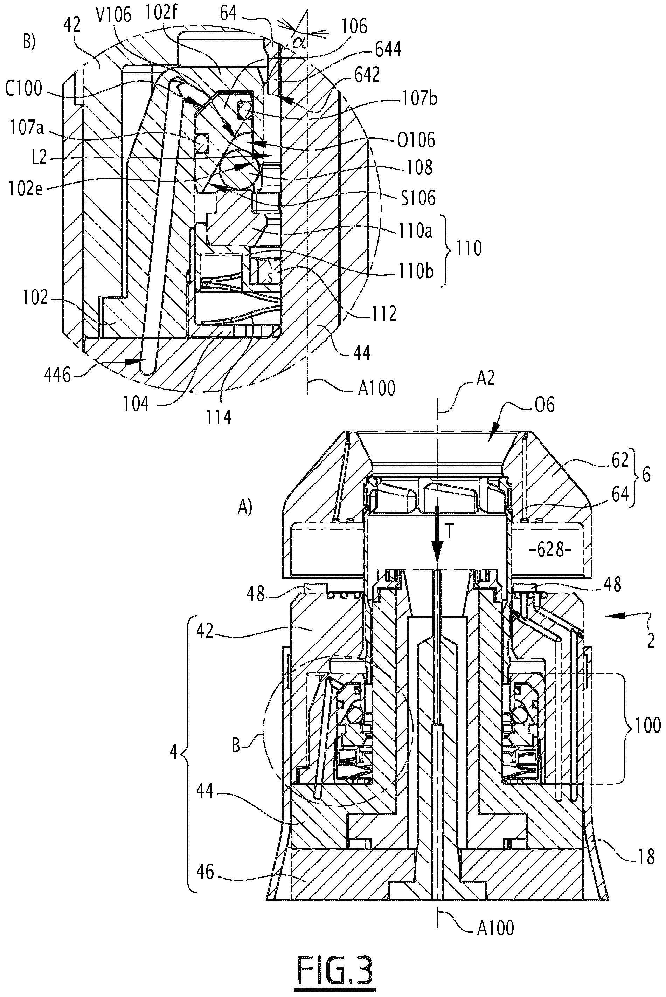

Dans une étape préalable représentée à la figure 1, la jupe d'amenée d'air 6 est alignée sur l'axe A2 et rapprochée du corps principal 4 pour atteindre la position de la figure 3 qui représente une première étape du procédé de montage. Dans cette étape, l'extrémité arrière 644 du manchon 64 est engagée dans le logement central L2, sans être en contact avec les composants du système magnéto-pneumatique 100.

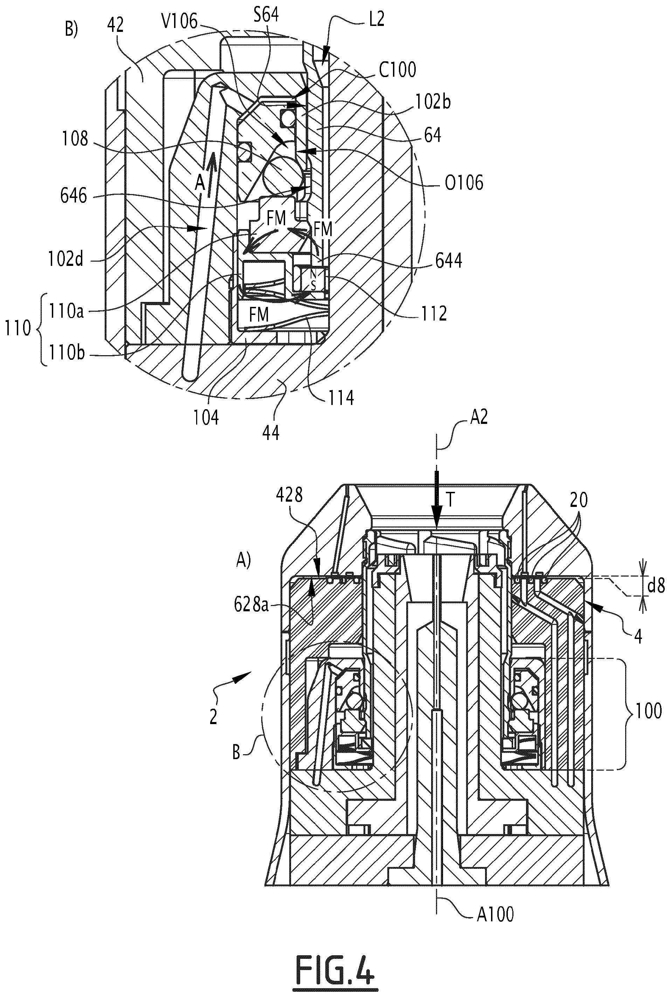

La poursuite du montage de la jupe 6 sur le corps principal 4 amène le manchon 64 à l'étape de la figure 4, où son extrémité arrière 644 est en appui par son bord 642 contre l'aimant permanent 112, alors que le bord 647a est en appui contre la surface S'110, ce qui évite une déformation plastique de l'extrémité 644 en fin de course.

Dans cette étape, un flux magnétique fermé FM est établi à travers l'extrémité arrière 644 du manchon 64, à travers les parties 110a et 110b du support 110 et à travers l'aimant 112, ce qui a pour effet de solidariser, par un effort magnétique axial d'attraction, la jupe d'amenée d'air 6 avec le support 110, lequel est retenu en position dans le logement central L2 puisqu'il est limité dans ses mouvements entre la coiffe 102 et la coupelle 104. L'effort magnétique axial d'attraction entre les pièces 12 et 64 est parallèle à l'axe longitudinal A2, de préférence centré sur cet axe, et résulte dans un accrochage de la jupe d'amenée d'air sur le corps principal. Cet effort est donc un effort d'accrochage de ces pièces ensemble.

L'aimant permanent 112 est choisi pour exercer sur le manchon 64 un effort magnétique d'accrochage d'intensité suffisante pour retenir en position la jupe d'amenée d'air 6 sur le corps principal 4, y compris lorsque celui-ci est déplacé, par exemple lorsqu'il est monté sur le poignet du bras d'un robot multiaxe ou sur un réciprocateur, ce qui soumet la jupe d'amenée d'air à ces accélérations potentiellement dirigées dans un sens d'extraction du manchon 64 par rapport au logement central L2.

En pratique, l'effort magnétique d'accrochage exercé par l'amant permanent sur le manchon a une intensité I1 comprise entre 10 et 20 daN, de préférence de l'ordre de 15 daN, ce qui permet un accrochage efficace de la jupe d'amenée d'air 6 sur le corps principal 4. D'autre part, la valeur relativement modérée de cette intensité I1 de l'effort magnétique d'accrochage limite les risques de blessure par pincement d'un opérateur lorsque celui-ci présente la jupe d'amenée d'air 6 et engage le manchon 64 dans le logement central L2.

Dans l'étape de la figure 4, la jupe d'amenée d'air 6 est accrochée sur le corps principal 4 grâce à l'effort magnétique, mais le fond 628a du logement en creux 628 reste écarté de la face avant 428 de la partie externe 42, d'une distance axiale d8 non nulle, cette distance d8 étant mesurée parallèlement à l'axe longitudinal A2. En particulier, dans cette étape, les joints 20 ne sont pas comprimés et l'étanchéité entre les circuits d'air, formés par les conduits 422 et 622 et les gorges 628c et 628d, n'est pas assurée vis-à-vis de l'extérieur.

Dans les étapes des figures 1, 3 et 4, le ressort 114 exerce sur le support 110 un effort d'éloignement par rapport à la coupelle 104, ce qui a pour effet d'engager les butées 110d dans les différents volumes V106, au point que ces butées 110d appuient sur les billes 108 qui appuient elles-mêmes sur les surfaces de came S106 du piston 106, ce qui a pour effet de repousser celui-ci vers le fond 102f du volume V102. La chambre de volume variable C100 a alors un volume minimum visible notamment à l'insert B) de la figure 3.

Dans cette position, chaque bille 108 est en appui contre le bord chanfreiné 102e de la coiffe 102, de sorte qu'elle est retenue en position dans le volume V106 correspondant sans faire saillie radialement de la paroi 102b, selon une direction radiale à l'axe longitudinal A100 et centripète. Dans ces conditions, les billes 108 ne s'opposent pas au coulissement du manchon 64 dans le logement central L2, notamment lors de la succession des étapes des figures1, 3 et 4. En particulier, dans l'étape de la figure 4, les billes 108 ne sont pas engagées dans la gorge périphérique externe 646.

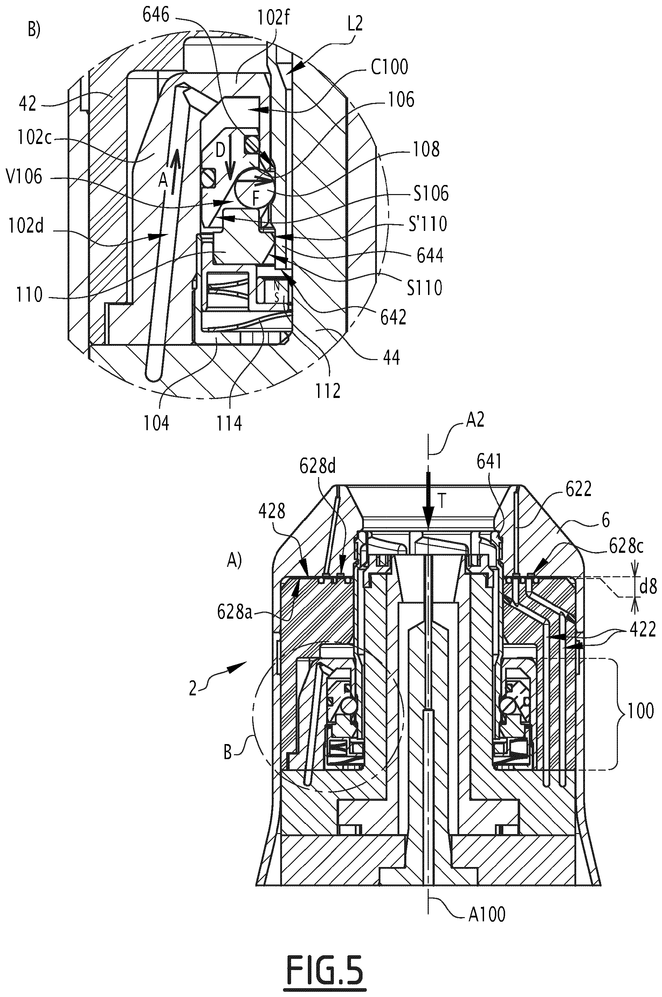

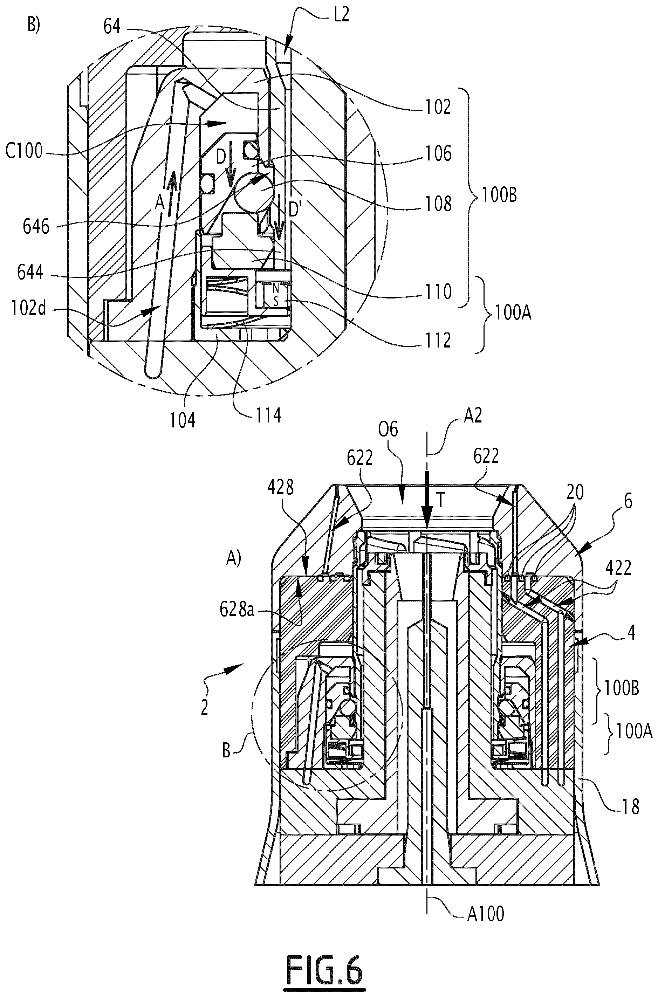

À partir de l'étape de la figure 4, le passage 102d est alimenté en air sous pression, ce que représente la flèche A aux figures 4 à 6. Ceci a pour effet de mettre sous pression la chambre de volume variable C100, laquelle s'expand, c'est-à-dire se dilate, en direction de la coupelle 104, comme cela ressort de la comparaison des figures 4 et 5. Cette expansion axiale de la chambre C100 résulte d'un déplacement axial, parallèle à l'axe longitudinal A2, du piston 106 en direction de la coupelle 104, représenté par la flèche D aux figures 5 et 6, ce déplacement étant dû à la différence entre la pression régnant à l'intérieur de la chambre de volume variable C100 et la pression atmosphérique externe.

Ce déplacement D du piston 106 a pour effet de déplacer en direction de la coupelle 104, donc du fond du logement central L2, les différentes billes 108 qui deviennent alors décalées par rapport au bord chanfreiné 102e de la paroi 102b, ce bord ne s'opposant alors plus à un mouvement radial centripète des billes 108 à travers les ouvertures 0106. Or, compte tenu du caractère incliné des surfaces de came S106 des différents volumes V106, le déplacement du piston 106 en direction de la coupelle 104 a pour effet d'exercer sur les différentes billes 108 un effort centripète par rapport à l'axe longitudinal A2, représenté par la flèche F à la figure 5 et dirigé vers la gorge périphérique externe 646. Ainsi, l'alimentation en air de la chambre C100 permet de resserrer différentes billes 108 autour du manchon 64, en les engageant, c'est-à-dire en les faisant pénétrer en partie au moins, dans la gorge périphérique externe 646. Les billes 108 constituent donc des organes de mise en prise du piston 106 avec le relief externe du manchon 64 constitué par la gorge périphérique 646.

Lors de la succession des étapes des figures 4 et 5, les billes 108 repoussent le support 110 en direction de la coupelle 104, à l'encontre de l'effort élastique exercé par le ressort 114, ce qui a pour effet de séparer axialement le ressort 112 et l'extrémité 644 du manchon 64. En d'autres termes, dans l'étape de la figure 5, le bord arrière 642 du manchon 64 n'est plus en appui contre l'aimant 112 et le bord 647a n'est plus en appui contre la surface S'110. Ceci n'est pas gênant puisque les billes 108 engagées dans la gorge périphérique externe 646 retiennent alors efficacement le manchon 64 dans le logement central L2.

Au terme de l'étape de la figure 5, la valeur de la distance d8 a décru par rapport à sa valeur dans l'étape de la figure 4, mais cette valeur demeure non nulle.

La poursuite de l'alimentation de la chambre de volume variable C100 en air sous pression à travers le passage 102d a pour effet la poursuite du déplacement du piston 106 en direction de la coupelle 104, à l'encontre de l'effort élastique exercé par le ressort 114, dans le sens de la flèche D à la figure 6. Lors de ce déplacement, les billes 108 viennent en appui contre le bord arrière 646a de la gorge périphérique externe 646 et transmettent au manchon 64 l'effort de déplacement qu'elles subissent du fait du mouvement du piston 106 dans le sens de la flèche D. Ainsi, le manchon 64 est déplacé en même temps et sur la même course que le piston 106, en direction du fond du logement central L2, ce que représente la flèche de déplacement D' à la figure 6.

Ce déplacement D' du manchon 64 à l'intérieur du logement central L2 a pour effet de plaquer fermement le fond 628a du logement en creux 628 contre la face avant 428 de la partie externe 42 du corps 4 en comprimant les joints 20, ce qui isole fluidiquement les conduits 422 et 622 et les gorges 628c et 628d de l'extérieur. En d'autres termes, le mécanisme pneumatique 100B exerce, sur le manchon 64 et au moyens des billes 108, un effort mécanique axial de serrage, parallèle à l'axe longitudinal A2, qui plaque fermement le fond 628a du logement en creux 328 de la jupe d'amenée d'air 6 contre la face avant 428.

Ainsi, la mise en place et l'immobilisation de la jupe d'amenée d'air 6 sur le corps principal 4 est effectuée en deux temps grâce au système magnéto-pneumatique 100. Le mécanisme pneumatique 100B est donc également un mécanisme de verrouillage de la jupe d'amenée d'air 6 sur le corps principal 4.

Le dispositif mécanique d'accrochage 100A, qui comprend les éléments 110 et 112, permet de retenir en position la jupe d'amenée d'air 6 sur le corps 2 avant que le mécanisme pneumatique de serrage 100B, qui comprend les éléments 102, 106, 108 et 110, soit utilisé en alimentant la chambre de volume variable C100 en air sous pression pour serrer effectivement la jupe d'amenée d'air 6 en place sur le corps principal 4, en particulier en comprimant les joints 20. La coupelle 104 et le ressort 114 sont des accessoires du dispositif mécanique d'accrochage 100A et du mécanisme pneumatique de serrage 100B au sein du système magnéto-pneumatique 100.

L'effort mécanique de serrage obtenu au moyen du mécanisme pneumatique de serrage 100B a une intensité I2 strictement supérieure à l'intensité de l'effort magnétique mentionné ci-dessus.

Par exemple, l'effort mécanique obtenu avec le mécanisme pneumatique de serrage 100B peut avoir une intensité comprise entre 80 et 200 daN, de préférence entre 100 et 150 daN, de préférence encore l'ordre de 120 daN.

Un procédé de montage de la jupe d'amenée d'air 6 sur le corps principal 4 comprend deux étapes principales à savoir
- Le fait d'introduire le manchon 64 dans le logement central L2 jusqu'à ce que le bord arrière 642 vienne au contact de l'élément permanent 112, ce qui permet au dispositif magnétique d'accrochage 100A d'exercer l'effort d'accrochage de la jupe d'amenée d'air 6 sur le corps principal 4, résultant du flux magnétique FM représenté à la figure 4 ;
- Le fait d'alimenter en air sous pression la chambre de volume variable C100 du mécanisme pneumatique de serrage 100B, comme représenté par la flèche A, ce qui a pour effet de déplacer le piston 106 et le manchon 64, respectivement dans le sens des flèches D et D' à la figure 6 et de serrer la jupe d'amenée d'air 6 sur le corps principal 4, en particulier en comprimant les joints 20.

Lorsqu'il convient de démonter la jupe 6 par rapport au corps principal 4, l'alimentation de la chambre de volume variable C100 en air sous pression est arrêtée et le passage 102d est mis à l'air libre. Le ressort 114 repousse alors le support 110, les billes 108 et le piston 106 vers le fond 102f du volume V102, en réduisant le volume de la chambre de volume variable C100.

Les billes 108 viennent alors en butée contre le bord chanfreiné 102e de la paroi 102b, ce qui a pour effet de les renvoyer vers l'intérieur des volumes V106, en les extrayant de la gorge périphérique externe 646. En d'autres termes, les billes 108 ne sont plus en prise avec la gorge périphérique externe 646. Ainsi, l'effort élastique exercé par le ressort 114 tend à renvoyer le piston vers une position dans laquelle billes 108 peuvent être dégagées de la gorge périphérique externe 646 du manchon 64.

En étant repoussé par le ressort 114, le support 110 entraine avec lui l'aimant 112 qui vient au contact du bord arrière 642 du manchon 64, ce qui a pour effet de réactiver l'effort magnétique d'accrochage entre le manchon 64 et l'aimant 112. Le système magnéto-pneumatique 100 est alors dans une configuration analogue à celle de la figure 4 où les joints 20 ne sont plus comprimés et où la jupe d'amenée d'air 6 demeure accrochée sur le corps principal 4 par l'effort magnétique résultant du flux magnétique FM représenté par les flèches F. La jupe d'amenée d'air 6 est retenue de façon fiable sur le corps principal 4, pour les raisons expliquées ci-dessus.

Il est alors possible d'extraire la jupe d'amenée d'air 6 en exerçant un effort axial dans un sens inverse à celui de la flèche T sur les figures 1 et 3 à 6.

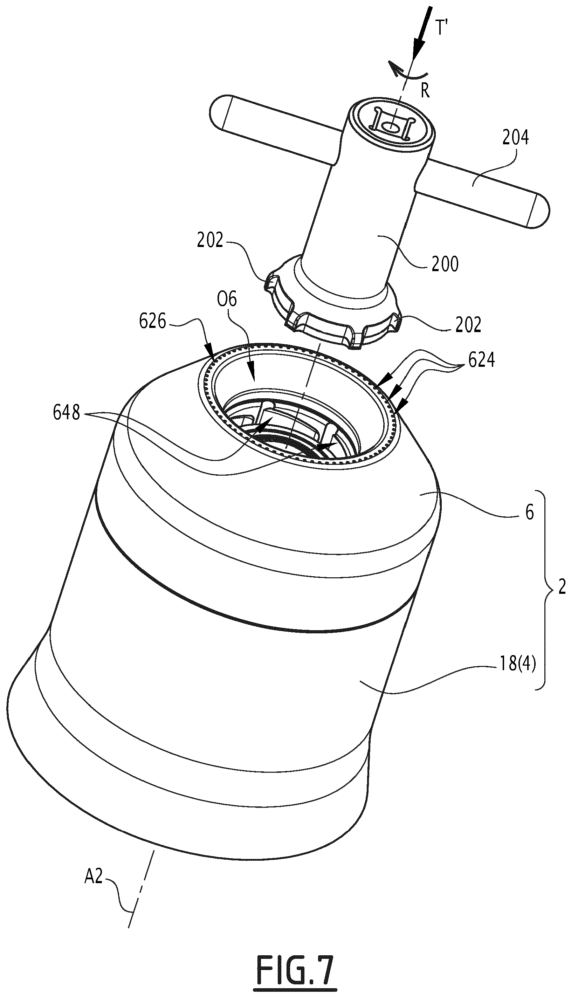

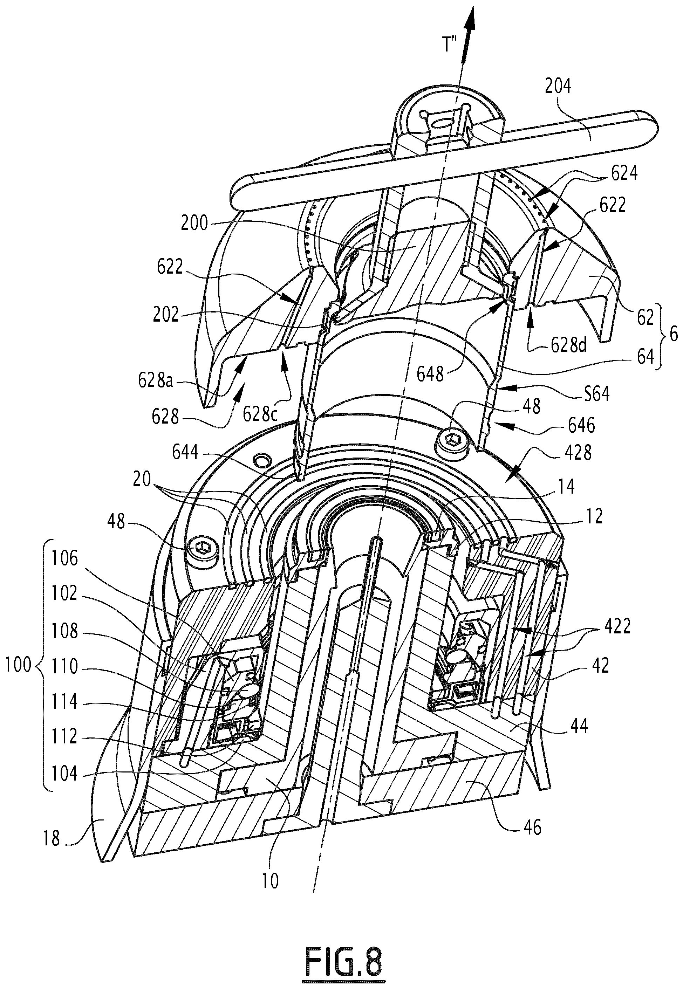

À cet égard, il est possible d'utiliser pour ce faire un outil de démontage 200 visible aux figures 7 et 8, qui fait partie du pulvérisateur 2, en ce sens qu'il est inclus dans la fourniture de ce pulvérisateur lors de son installation sur un site d'application de produit de revêtement, et qui est pourvu de dents 202 d'accrochage avec les reliefs internes 648 du manchon 64, ménagés au niveau de son extrémité avant 641. Les reliefs 648 sont inclinés par rapport à un axe longitudinal A64 du manchon 64, d'un angle β non nul, par exemple compris entre 45 et 70°. Les axes longitudinaux A2, A64 et A100 sont confondus en configuration montée de la jupe d'amenée d'air sur le corps principal 4.

L'outil de démontage 200 comprend également une poignée 204 permettant de le manipuler à la main. Il s'agit donc d'un outil de démontage manuel.

Lorsqu'il convient de retirer la jupe d'amenée d'air 6, l'outil 200 est partiellement introduit dans le manchon 64, par une translation axiale dans le sens de la flèche T' à la figure 7 puis cet outil est mis en rotation autour de l'axe longitudinal A2, dans le sens de la flèche R à la figure 7 pour amener en prise les reliefs 202 et 648. Les reliefs sont alors en appui contre l'embout 12 et l'aimant permanent 14. Compte tenu du caractère incliné des reliefs 648, la mise en rotation de l'outil 200 dans le sens de la flèche R a pour effet d'exercer un effort de séparation axiale des reliefs 648 et de l'embout 12, ce qui induit un écartement du bord arrière 642 du manchon 64 par rapport à l'aimant permanent 112. L'effort magnétique d'accrochage est ainsi fortement réduit en intensité, voire annulé. Il est alors possible d'exercer sur la poignée 204 de l'outil 200 un effort axial dans le sens de la flèche T" à la figure 8, en sens inverse de celui de la flèche T', ce qui permet d'extraire la jupe d'amenée d'air 6, à l'encontre de l'effort magnétique réduit exercé par l'aimant 112, voire en l'absence d'un tel effort.

Selon une variante non-représentée de l'invention, il est possible de remplacer l'outil de démontage manuel 200 par un outil de démontage automatique, monté à l'extrémité d'un bras de robot et qui exécute des mouvements selon les flèches T', R, et T", comme expliqué ci-dessus.

Que ce soit avec un outil de démontage manuel ou avec un outil de démontage automatique, un procédé de démontage de la jupe d'amenée d'air 6 par rapport au corps principal 4 comprend des étapes successives consistant à
- solidariser l'outil de démontage 200 avec le manchon 64, notamment par coopération de formes au moyen d'une rotation ;
- exercer sur l'outil de démontage un effort axial T" de séparation du manchon 64 vis-à-vis du dispositif magnétique d'accrochage 100A.

En outre, la structure du système magnéto-pneumatique 100 de l'invention est compatible avec une mise en place de la jupe d'amenée d'air 6 sur le corps principal 4 au moyen d'un robot. Ainsi, selon un aspect particulier, la présente invention permet d'automatiser le montage et le démontage d'une jupe d'amenée d'air sur le corps principal d'un pulvérisateur.

Le bol 8 n'est pas représenté sur les figures 3 à 8. Il est mis en place dans l'ouverture centrale O6 de la jupe d'amenée d'air 6 après que celle-ci a été accrochée et serrée sur le corps principal 4, à la fin de l'étape représentée à la figure 6 et en utilisant l'effort magnétique entre l'aimant 14 et le corps ferromagnétique du bol. Le bol 8 est retiré avant l'utilisation de l'outil 200.

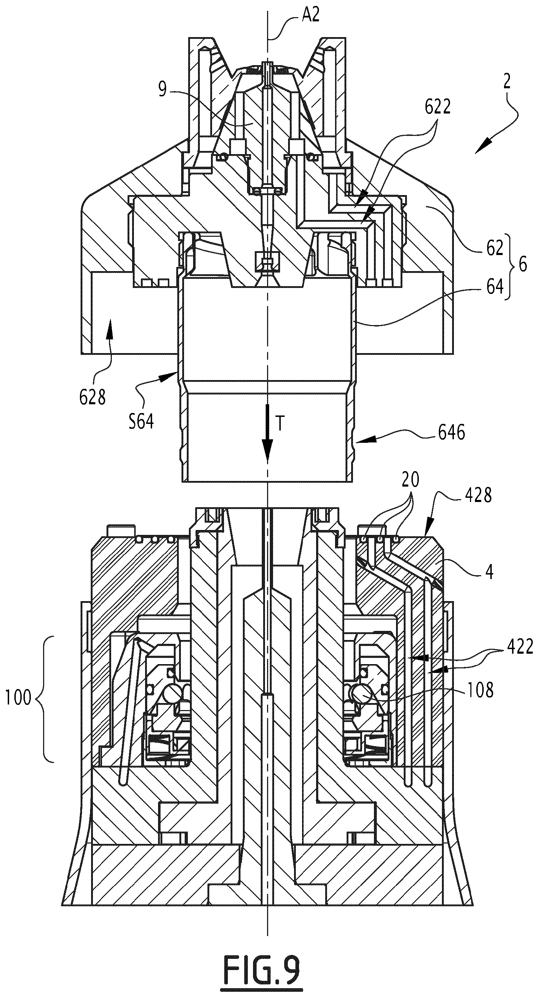

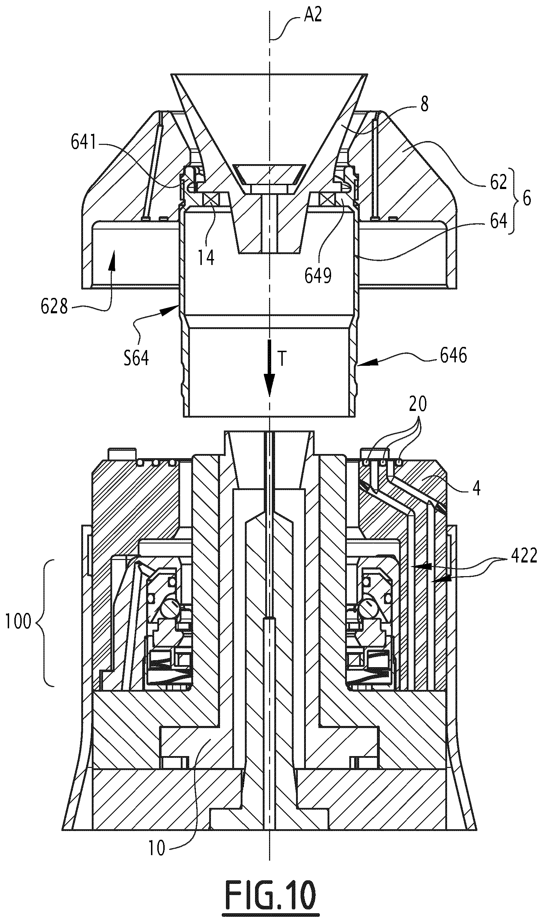

Dans les deuxième et troisième modes de réalisation de l'invention représentés aux figures 9 et 10, les éléments analogues à ceux du premier mode de réalisation portent les mêmes références. Dans ce qui suit, si une référence est utilisée dans la description sans être portée sur l'une des figures 10 et 11 ou si une référence est portée sur l'une de ces figures sans être mentionnée dans la description, elle concerne le même élément que celui portant la même référence dans le premier mode de réalisation.

Dans le deuxième mode de réalisation, le pulvérisateur 2 est de type pneumatique, dépourvu d'un bol tournant comparable au bol tournant 8 du premier mode de réalisation. Dans ce mode de réalisation, une tête de pulvérisation 9 est montée sur une jupe d'amenée d'air 6 qui comprend un corps de jupe 62 et un manchon 64 comparables à ceux du premier mode de réalisation. Le corps principal 4 du pulvérisateur 2 définit des conduits 422 destinés à être raccordés à des conduits 622 prévus dans le corps de jupe 62. Un système magnéto-pneumatique 100 analogue à celui du premier mode de réalisation est prévu et permet d'accrocher la jupe d'amenée d'air 6 déjà équipée de la tête de pulvérisation 9 sur le corps principal 4, puis d'exercer, au moyens d'organes de mise en prise 108 engagés dans un relief 646 du manchon 64, un effort de serrage qui permet notamment de comprimer des joints toriques 20.

En variante non-représentée, la jupe d'amenée d'air 6 est montée et serrée sur le corps principal 4 avant montage de la tête de pulvérisation 9 sur la jupe d'amenée d'air. Selon une autre variante, la tête de pulvérisation 9 est montée sur le corps principal 4 avant montage et serrage de la jupe d'amenée d'air 6 sur le corps principal 4.

La forme du corps principal 4 représentée à la figure 9 n'est pas limitative. En particulier, ce corps principal 4 ne comprend pas nécessairement un rotor et une partie fixe formant un stator.

Dans le troisième mode de réalisation, l'aimant permanent annulaire 14 est porté par la jupe d'amenée d'air 6, plus particulièrement par le manchon 64, au niveau de son extrémité avant 641. En particulier, le bol 8 est en appui sur une collerette radiale interne 649 du manchon 64 dans laquelle est intégré l'aimant 14.

Ainsi, un sous-ensemble formé de la jupe d'amenée d'air 6 et du bol 8 peut être monté de sur le corps principal 4, ou démonté par rapport à celui-ci, de façon unitaire.

Le pulvérisateur 2 de ce troisième mode de réalisation est équipé d'un système magnéto-pneumatique 100 analogue à celui du premier mode de réalisation.

En variante, dans le troisième mode de réalisation, la jupe d'amenée d'air 6 peut être mise en place donc, accrochée et serrée sur le corps principal 4 dans un premier temps, le bol 8 étant rapporté sur la jupe d'amenée d'air dans un deuxième temps.

A cet égard, dans le premier mode de réalisation, il est possible en variante d'accrocher et de serrer la jupe d'amenée d'air 6 sur le corps principal 4 alors que le bol 8 est déjà engagé dans l'ouverture centrale O6 la jupe d'amenée d'air.

En variante et quel que soit le mode de réalisation, pulvérisateur 2 est de type électrostatique à charge externe et comprend une unité haute-tension et des électrodes de charge non-représentées, configurées pour porter à un potentiel électrique donné le produit de revêtement pulvérisé par le pulvérisateur 2.

En variante non-représentée de l'invention, lorsque le pulvérisateur 2 comprend un bol de pulvérisation 8, celui-ci peut être solidarisé au rotor 10 par des moyens autres que magnétique, par exemple par vissage.

Selon une autre variante applicable à tous les modes de réalisation, le pulvérisateur n'est pas de type électrostatique.

Selon une autre variante applicable à tous les modes de réalisation, lors de l'étape de la figure 4, le bord 642 du manchon 64 vient en appui contre le support 110 et non pas contre l'aimant 112. Ceci permet également de créer un flux magnétique fermé du type du flux magnétique fermé FM représenté à la figure 4.

Quel que soit le mode de réalisation, le système magnéto-pneumatique 100 peut être utilisé de façon automatique, en se servant de l'effort magnétique généré par l'aimant permanent 114 et en pilotant l'arrivée d'air sous pression dans la chambre de volume variable C100 ou son évacuation au moyen de vannes pilotées par une unité électronique de contrôle non-représentée. Ainsi le fonctionnement du système magnéto-pneumatique 100 lors du montage ou du démontage de la jupe d'amenée d'air 6 peut-il être automatisé, ce qui soulage un opérateur travaillant à proximité du pulvérisateur 2 et rend son travail moins dangereux.

Quel que soit le mode de réalisation, la chambre de volume variable C100 du système magnéto-pneumatique 100 peut, en variante, être alimentée avec un gaz sous pression différent de l'air.

Selon une autre variante non-représentée de l'invention, la chambre de volume variable C100 du système 100 peut être alimentée en liquide, notamment en eau, pour piloter le déplacement D du piston 106. Dans ce cas, le système 100 est un système magnéto-hydraulique.

En variante applicable à tous les modes de réalisation, les joints toriques 20 sont montés dans des gorges ménagées sur le fond 628a du logement en creux 628 et/ou des gorges équivalentes aux gorges 628c et 628d sont prévues sur la face avant 428 de la partie externe 42 du corps principal 4.

L'invention est décrite ci-dessus dans le cadre de son utilisation pour la projection de produit de revêtement liquide. Elle s'applique également à la projection de produit de revêtement pulvérulent.

Pour autant que techniquement possible, les modes de réalisation et variantes mentionnés ci-dessus peuvent être combinés.

## Revendications

1. Pulvérisateur de produit de revêtement (2) comprenant un corps principal (4), une jupe d'amenée d'air (6) rapportée sur le corps principal et un moyen (112) d'attraction magnétique entre le corps magnétique et la jupe d'amenée d'air, **caractérisé en ce que** le pulvérisateur comprend un système magnéto-pneumatique ou magnéto-hydraulique (100) qui inclut
- un dispositif magnétique (100A) d'accrochage de la jupe d'amenée d'air (6) sur le corps principal (4) ; et
- un mécanisme pneumatique ou hydraulique (100B) de verrouillage et de serrage de la jupe d'amenée d'air sur le corps principal.

2. Pulvérisateur de produit de revêtement selon la revendication 1, **caractérisé en ce que** le dispositif magnétique d'accrochage (100A) est configuré pour exercer, entre la jupe d'amenée d'air (6) et le corps principal (4), un effort magnétique axial, parallèle à un axe longitudinal (A2) du pulvérisateur, avec une première intensité (I1), **en ce que** le mécanisme pneumatique ou hydraulique de serrage (100B) est configuré pour exercer entre la jupe d'amenée d'air et le corps principal un effort mécanique axial, parallèle à l'axe longitudinal du pulvérisateur, avec une deuxième intensité (I2) et **en ce que** la deuxième intensité est strictement supérieure à la première intensité.

3. Pulvérisateur de produit de revêtement selon la revendication 2, **caractérisé en ce qu'**il comprend des joints d'étanchéité (20) disposés entre la jupe d'amenée d'air (6) et le corps principal (4) et **en ce que** les joints d'étanchéité comprimés par l'effort mécanique exercé par le mécanisme pneumatique ou hydraulique de serrage (100B) isolent des conduits (422, 622) de circulation d'air de conformation ménagés dans le corps principal (4) et dans un corps (62) de la jupe d'amenée d'air (6), vis-à-vis de l'extérieur du pulvérisateur (2).

4. Pulvérisateur de produit de revêtement selon l'une des revendications précédentes, **caractérisé en ce que** la jupe d'amenée d'air (6) comprend un manchon (64) réalisé dans un matériau ferromagnétique, centré sur un axe longitudinal (A2) du pulvérisateur (2) en configuration montée de la jupe d'amenée d'air sur le corps principal (4) et pourvu d'au moins un relief externe (646) de coopération avec le mécanisme pneumatique ou hydraulique de serrage (100B).

5. Pulvérisateur de produit de revêtement selon la revendication 4, **caractérisé en ce que** le dispositif magnétique d'accrochage (100A) comprend un aimant permanent (112) monté sur un support (110), mobile parallèlement à l'axe longitudinal (A2) du pulvérisateur (2) et **en ce que** l'aimant permanent ou le support est configuré pour recevoir en appui une extrémité (644) du manchon opposé à un corps de jupe (62).

6. Pulvérisateur de produit de revêtement selon l'une des revendications 4 et 5, **caractérisé en ce que** le mécanisme pneumatique ou hydraulique de serrage (100B) comprend un piston (106), mobile parallèlement à l'axe longitudinal (A2) du pulvérisateur (2), à l'intérieur d'une chambre (C100) sélectivement alimentée en fluide sous pression, et **en ce que** le piston est équipé d'organes (108) de mise en prise avec le relief externe (646) du manchon (64).

7. Pulvérisateur de produit de revêtement selon la revendication 6, **caractérisé en ce que** les organes de mise en prise sont des billes (108), **en ce que** le piston comprend des surfaces de came (S106) inclinées par rapport à l'axe longitudinal (A2) du pulvérisateur (2) et **en ce que**, lorsque la jupe d'amenée d'air (6) est accrochée sur le corps principal (4) par le dispositif magnétique d'accrochage (100A) et lorsque le piston (106) est déplacé (D) en direction d'une extrémité (644) du manchon opposée à un corps (62) de la jupe d'amenée d'air (6), les surfaces de came exercent sur les billes un effort (F) d'engagement dans le relief externe (646) du manchon, cet effort étant centripète par rapport à l'axe longitudinal.

8. Pulvérisateur de produit de revêtement selon l'une des revendications 6 et 7, **caractérisé en ce qu'**il comprend au moins un organe élastique (114) de renvoi du piston (106) vers une position dans laquelle les organes de mise en prise (108) sont dégagés du relief externe (646) du manchon (64).

9. Pulvérisateur de produit de revêtement selon l'une des revendications précédentes, **caractérisé en ce qu'**il comprend un outil de démontage (200) de la jupe d'amenée d'air (6), cet outil de démontage comprenant des reliefs (202) d'accrochage sur la jupe d'amenée d'air et étant configuré pour exercer sur la jupe d'amenée d'air un effort (T") parallèle à un axe longitudinal (A2) du pulvérisateur (2) et opposé à un effort magnétique exercé sur la jupe d'amenée d'air par le dispositif magnétique d'accrochage (100A).

10. Procédé de montage d'une jupe d'amenée d'air (6) sur un corps principal (4) d'un pulvérisateur (2) de produit de revêtement selon l'une des revendications précédentes, **caractérisé en ce qu'**il comprend au moins des étapes successives consistant à :
a) introduire un manchon (64) de la jupe d'amenée d'air (6) dans un logement central (L2) du corps principal (4) jusqu'à ce que le dispositif magnétique d'accrochage (100B) exerce un effort magnétique d'accrochage de la jupe d'amenée d'air sur le corps principal ; et
b) alimenter (A) le mécanisme pneumatique ou hydraulique de serrage (100B) en fluide sous pression jusqu'à ce que le mécanisme pneumatique ou hydraulique de serrage (100B) exerce un effort mécanique de serrage de la jupe d'amenée d'air sur le corps principal.

11. Procédé de montage selon la revendication 10, **caractérisé en ce que** le pulvérisateur est selon la revendication 7 et **en ce que** lors de l'étape b), le piston (106) déplace les billes (108) en direction d'un fond du logement central (L2), en entraînant le manchon (64) avec les billes (108) engagées dans le relief externe (646).

## Patentansprüche

1. Zerstäuber für Beschichtungsprodukt (2), umfassend einen Hauptkörper (4), eine Luftzufuhrschürze (6), die an dem Hauptkörper angebracht ist, und eine magnetische Anziehungseinrichtung (112) zwischen dem magnetischen Körper und der Luftzufuhrschürze, **dadurch gekennzeichnet, dass** der Zerstäuber ein magnetopneumatisches oder magneto-hydraulisches System (100) umfasst, das Folgendes beinhaltet
- eine magnetische Vorrichtung (100A) zum Einhängen der Luftzufuhrschürze (6) an dem Hauptkörper (4); und
- einen pneumatischen oder hydraulischen Mechanismus (100B) zum Verriegeln und Einspannen der Luftzufuhrschürze an dem Hauptkörper.

2. Zerstäuber für Beschichtungsprodukt nach Anspruch 1, **dadurch gekennzeichnet, dass** die magnetische Einhängevorrichtung (100A) konfiguriert ist, um zwischen der Luftzufuhrschürze (6) und dem Hauptkörper (4) eine axiale magnetische Kraft parallel zu einer Längsachse (A2) des Zerstäubers mit einer ersten Stärke (I1) auszuüben, dass der pneumatische oder hydraulische Einspannmechanismus (100B) konfiguriert ist, um zwischen der Luftzufuhrschürze und dem Hauptkörper eine axiale mechanische Kraft parallel zu der Längsachse des Zerstäubers mit einer zweiten Intensität (12) auszuüben, und dass die zweite Intensität strikt größer ist als die erste Intensität.

3. Zerstäuber für Beschichtungsprodukt nach Anspruch 2, **dadurch gekennzeichnet, dass** er Dichtungen (20) umfasst, die zwischen der Luftzufuhrschürze (6) und dem Hauptkörper (4) angeordnet sind, und dass die Dichtungen, die durch die von dem pneumatischen oder hydraulischen Klemmmechanismus (100B) ausgeübte mechanische Kraft zusammengedrückt werden, in dem Hauptkörper (4) und in einem Körper (62) der Luftzufuhrschürze (6) gebildeten Formgebungsluftzirkulationskanäle (422, 622) gegenüber der Außenseite des Zerstäubers (2) isolieren.

4. Zerstäuber für Beschichtungsprodukt nach einem der vorhergehenden Ansprüche, **dadurch gekennzeichnet, dass** die Luftzufuhrschürze (6) eine aus einem ferromagnetischen Material hergestellte Hülse (64) umfasst, die in der montierten Konfiguration der Luftzufuhrschürze auf dem Hauptkörper (4) auf eine Längsachse (A2) des Zerstäubers (2) zentriert ist und mit mindestens einer äußeren Erhebung (646) zum Zusammenwirken mit dem pneumatischen oder hydraulischen Klemmmechanismus (100B) versehen ist.

5. Zerstäuber für Beschichtungsprodukt nach Anspruch 4, **dadurch gekennzeichnet, dass** die magnetische Einhängevorrichtung (100A) einen Permanentmagneten (112) umfasst, der auf einer Halterung (110) montiert ist und parallel zu der Längsachse (A2) des Zerstäubers (2) bewegbar ist, und dass der Permanentmagnet oder die Halterung konfiguriert ist, um ein Ende (644) der Hülse gegenüber einem Schürzenkörper (62) anliegend aufzunehmen.

6. Zerstäuber für Beschichtungsprodukt nach einem der Ansprüche 4 oder 5, **dadurch gekennzeichnet, dass** der pneumatische oder hydraulische Einspannechanismus (100B) einen Kolben (106) umfasst, der parallel zu der Längsachse (A2) des Zerstäubers (2) im Inneren einer Kammer (C100) bewegbar ist, die selektiv mit Druckfluid versorgt wird, und dass der Kolben mit Elementen (108) zum Eingreifen mit der äußeren Erhebung (646) der Hülse (64) ausgestattet ist.

7. Zerstäuber für Beschichtungsprodukt nach Anspruch 6, **dadurch gekennzeichnet, dass** die Eingriffselemente Kugeln (108) sind, dass der Kolben Nockenflächen (S106) umfasst, die in Bezug auf die Längsachse (A2) des Zerstäubers (2) geneigt sind, und dass, wenn die Luftzufuhrschürze (6) durch die magnetische Einhängevorrichtung (100A) an dem Hauptkörper (4) eingehängt ist und wenn der Kolben (106) in Richtung eines Endes (644) der Hülse gegenüber einem Körper (62) der Luftzufuhrschürze (6) bewegt (D) wird, die Nockenflächen auf die Kugeln eine Kraft (F) zum Eingreifen in das äußere Relief (646) der Hülse ausüben, wobei diese Kraft in Bezug auf die Längsachse zentripetal ist.

8. Zerstäuber für Beschichtungsprodukt nach einem der Ansprüche 6 und 7, **dadurch gekennzeichnet, dass** er mindestens ein elastisches Element (114) zum Rückholen des Kolbens (106) in eine Position umfasst, in der die Eingriffselemente (108) aus dem äußeren Relief (646) der Hülse (64) freigegeben sind.

9. Zerstäuber für Beschichtungsprodukt nach einem der vorherigen Ansprüche, **dadurch gekennzeichnet, dass** er ein Ausbauwerkzeug (200) der Luftzufuhrschürze (6) umfasst, dieses Ausbauwerkzeug Vorsprünge (202) zum Einhängen an der Luftzufuhrschürze umfasst und konfiguriert ist, um auf die Luftzufuhrschürze eine Kraft (T") auszuüben, die parallel zu einer Längsachse (A2) des Zerstäubers (2) und entgegengesetzt zu einer magnetischen Kraft ist, die durch die magnetische Einhängevorrichtung (100 A) auf die Luftzufuhrschürze ausgeübt wird.

10. Montageverfahren einer Luftzufuhrschürze (6) an einem Hauptkörper (4) eines Zerstäubers (2) für Beschichtungsprodukt nach einem der vorherigen Ansprüche, **dadurch gekennzeichnet, dass** es mindestens aufeinanderfolgende Schritte umfasst, die aus Folgendem bestehen:
a) Einführen einer Hülse (64) der Luftzufuhrschürze (6) in eine mittlere Aussparung (L2) des Hauptkörpers (4), bis die magnetische Einhängevorrichtung (100B) eine magnetische Kraft zum Einhängen der Luftzufuhrschürze an dem Hauptkörper ausübt; und
b) Versorgen (A) des pneumatischen oder hydraulischen Einspannmechanismus (100B) mit Druckfluid, bis der pneumatische oder hydraulische Einspannmechanismus (100B) eine mechanische Einspannkraft der Luftzufuhrschürze an dem Hauptkörper ausübt.

11. Montageverfahren nach Anspruch 10, **dadurch gekennzeichnet, dass** der Zerstäuber nach Anspruch 7 ist und dass in Schritt b) der Kolben (106) die Kugeln (108) in Richtung eines Bodens der mittleren Aufnahme (L2) bewegt, indem er die Hülse (64) mitnimmt, wobei die Kugeln (108) in das äußere Relief (646) eingreifen.

## Claims

1. A coating product atomizer (2) comprising a main body (4), an air supply skirt (6) attached to the main body and a magnetic attraction means (112) between the magnetic body and the air supply skirt, **characterized in that** the atomizer comprises a magneto-pneumatic or magneto-hydraulic system (100) which includes
- a magnetic device (100A) for hooking the air supply skirt (6) to the main body (4); and
- a pneumatic or hydraulic mechanism (100B) for locking and clamping the air supply skirt to the main body.

2. The coating product atomizer according to claim 1, **characterized in that** the magnetic hooking device (100A) is configured to exert, between the air supply skirt (6) and the main body (4), an axial magnetic force, parallel to a longitudinal axis (A2) of the atomizer, with a first intensity (I1), **in that** the pneumatic or hydraulic clamping mechanism (100B) is configured to exert between the air supply skirt and the main body an axial mechanical force, parallel to the longitudinal axis of the atomizer, with a second intensity (12) and **in that** the second intensity is strictly greater than the first intensity.

3. The coating product atomizer according to claim 2, **characterized in that** it comprises seals (20) arranged between the air supply skirt (6) and the main body (4) and **in that** the seals compressed by the mechanical force exerted by the pneumatic or hydraulic clamping mechanism (100B) isolate the air flow ducts (422, 622) arranged in the main body (4) and in a body (62) of the air supply skirt (6) vis-a-vis the outside of the atomizer (2).

4. The coating product atomizer according to one of the preceding claims, **characterized in that** the air supply skirt (6) comprises a sleeve (64) made of a ferromagnetic material, centered on a longitudinal axis (A2) of the atomizer (2) in the mounted configuration of the air supply skirt on the main body (4) and provided with at least one external relief (646) for cooperation with the pneumatic or hydraulic clamping mechanism (100B).

5. The coating product atomizer according to claim 4, **characterized in that** the magnetic hooking device (100A) comprises a permanent magnet (112) mounted on a support (110), movable parallel to the longitudinal axis (A2) of the atomizer (2) and **in that** the permanent magnet or the support is configured to receive in abutment one end (644) of the sleeve opposite a skirt body (62).

6. The coating product atomizer according to one of claims 4 and 5, **characterized in that** the pneumatic or hydraulic clamping mechanism (100B) comprises a piston (106), movable parallel to the longitudinal axis (A2) of the atomizer (2), inside a chamber (C100) selectively supplied with pressurized fluid, and **in that** the piston is equipped with members (108) for engagement with the external relief (646) of the sleeve (64).

7. The coating product atomizer according to claim 6, **characterized in that** the engagement members are balls (108), **in that** the piston comprises cam surfaces (S106) inclined relative to the longitudinal axis (A2) of the atomizer (2) and **in that**, when the air supply skirt (6) is hooked onto the main body (4) by the magnetic hooking device (100A) and when the piston (106) is displaced (D) toward an end (644) of the sleeve opposite a body (62) of the air supply skirt (6), the cam surfaces exert on the balls an engagement force (F) in the external relief (646) of the sleeve, this force being centripetal relative to the longitudinal axis.

8. The coating product atomizer according to one of claims 6 and 7, **characterized in that** it comprises at least one elastic member (114) for returning the piston (106) toward a position in which the engagement members (108) are disengaged from the external relief (646) of the sleeve (64).

9. The coating product atomizer according to one of the preceding claims, **characterized in that** it comprises a tool (200) for dismantling the air supply skirt (6), this dismantling tool comprising reliefs (202) for hooking onto the air supply skirt and being configured to exert on the air supply skirt a force (T") parallel to a longitudinal axis (A2) of the atomizer (2) and opposite to a magnetic force exerted on the air supply skirt by the magnetic hooking device (100A).

10. A method for mounting an air supply skirt (6) on a main body (4) of a coating product atomizer (2) according to one of the preceding claims, **characterized in that** it comprises at least successive steps consisting of:
a) introducing a sleeve (64) of the air supply skirt (6) into a central housing (L2) of the main body (4) until the magnetic hooking device (100A) exerts a magnetic hooking force on the air supply skirt on the main body; and
b) supplying (A) the pneumatic or hydraulic clamping mechanism (100B) with pressurized fluid until the pneumatic or hydraulic clamping mechanism (100B) exerts a mechanical force to clamp the air supply skirt to the main body.

11. The method for mounting according to claim 10, **characterized in that** the atomizer is according to claim 7 and **in that** during step b), the piston (106) displaces the balls (108) in the direction of a bottom of the central housing (L2), driving the sleeve (64) with the balls (108) engaged in the external relief (646).
